# EUROPÄISCHE PATENTANMELDUNG

(11) **EP 4 011 514 A1**
(43) Veröffentlichungstag der Anmeldung: **15.06.2022**
(21) Anmeldenummer: 20213455.7
(22) Anmeldetag: 11.12.2020
(51) Int. Cl.: B21C 23/14, B21C 23/18, B21C 23/22, B21C 27/00, B21C 31/00, B30B 11/22, B30B 11/26, B29C 48/48, B29C 48/49, B30B 15/30

(54) **VERFAHREN UND VORRICHTUNG ZUM HERSTELLEN EINES STRANGPRESSPRODUKTS**

(71) Anmelder: Technische Universität Berlin, 10623 Berlin (DE)
(72) Erfinder: MÜLLER, Sören, 12169 Berlin (DE); NITSCHKE, René, 10249 Berlin (DE); GALL, Sven, 12169 Berlin (DE); GENSCH, Felix, 16540 Hohen Neuendorf (DE)
(74) Vertreter: Bittner, Thomas L.

(57) **Zusammenfassung**

Die Erfindung betrifft ein Verfahren und eine Vorrichtung zum Herstellen eines Strangpressprodukt. Bei dem Verfahren wird eine Strangpressvorrichtung bereitgestellt, aufweisend: einen Aufnehmer (7); eine erste Aufnehmerbohrung (5), die in dem Aufnehmer (7) gebildet und in der ein erster Pressstempel (10) angeordnet ist; eine zweite Aufnehmerbohrung (6), die in dem Aufnehmer (7) getrennt von der ersten Aufnehmerbohrung (5) gebildet und in der ein zweiter Pressstempel (11) angeordnet ist; und ein Formwerkzeug (15) mit einem Formhohlraum (14), welcher mit der ersten und der zweiten Aufnehmerbohrung (5, 6) verbunden sind. Das Verfahren umfasst weiterhin Folgendes: Anordnen eines ersten Werkstoffbolzens (8) aus einem ersten Werkstoff (2) in der ersten Aufnehmerbohrung (5); Anordnen eines zweiten Werkstoffbolzens (9) aus einem zweiten Werkstoff (3) in der zweiten Aufnehmerbohrung (6); und Strangpressen eines Strangpressprodukts (1), bei dem der erste und der zweite Werkstoff (2, 3) form- und stoffschlüssig verbunden sind, Folgendes aufweisend: Vorschieben des ersten Pressstempels (10) in der ersten Aufnehmerbohrung (5), derart, dass hierdurch der erste Werkstoff (2) in den Formhohlraum (14) des Formwerkzeugs (15) gepresst und hierbei umgeformt wird; Vorschieben des zweiten Pressstempels (11) in der zweiten Aufnehmerbohrung (6), derart, dass hierdurch der zweite Werkstoff (3) in den Formhohlraum (14) des Formwerkzeugs (15) gepresst und hierbei umgeformt wird; und stoff- und formschlüssiges Verbinden des ersten und des zweiten Werkstoffs (2, 3) zu einem Strangpressprodukt (1) in dem Formwerkzeug (15).

## Beschreibung

Die Erfindung bezieht sich auf ein Verfahren und eine Vorrichtung zum Herstellen eines Strangpressprodukts.

### Hintergrund

Das Strangpressen stellt im Bereich der Massivumformung eine energieeffiziente Möglichkeit dar, aus Vormaterial mittels nur eines Umformschritts als Strangpressprodukt insbesondere endkonturnahe Halbzeuge herzustellen. Verschiedene Werkstoffe können verarbeitet werden. Neben Leichtmetallen wie Aluminium, Magnesium und Titan lassen sich zum Beispiel auch Eisenmetalle, Buntmetalle und Edelmetalle sowie deren Legierungen in Form bringen. Die Prozesstemperaturen können hierbei bis zu etwa 1300 °C betragen, können aber auch unterhalb 0 °C liegen. Das Verfahren ermöglicht es, engste Formtoleranzen einzuhalten und darüber hinaus über die Mikrostruktur die chemischen und physikalischen Eigenschaften der Pressprodukte den spezifischen Anforderungen der Endprodukte anzupassen. Als Ausgangmaterial eignen sich außer Gussvormaterial beispielweise auch Schmiedezwischenprodukte und Pulverwerkstoffe.

Den immer umfangreicheren Anforderungsprofilen für Struktur- und Funktionsbauteile sowohl im Automotive- als auch im Transport-, Energie-, Medizin- und Luftfahrtbereich wird zunehmend mit belastungsangepassten Konzepten begegnet. Dazu gehören neben querschnittsoptimierten Geometrien auch vermehrt Hybridkonzepte, in denen unterschiedliche Werkstoffe oder Legierungen lokale Anwendung im Bauteil finden. Allen diesen Konzepten gemein ist die Notwendigkeit eines zusätzlichen Fügeprozesses für die Herstellung einer stoff-, kraft- oder formschlüssigen Verbindung. Diese findet entweder vor oder im Anschluss an die endkonturnahe Formgebung statt.

Um Metalle stoffschlüssig miteinander zu verbinden, müssen die reinen Metalloberflächen einander bis auf einen Atomabstand angenähert werden. Hierbei müssen sowohl ein ausreichend hoher Druck als auch eine ausreichend hohe Temperatur herrschen, um die Oberflächenrauheit einzuebnen und die nötige Annäherung zu erzeugen sowie die für die chemische Bindung notwendigen Diffusionsvorgänge zu ermöglichen. Da Metalloberflächen im Allgemeinen mit Verunreinigungen und Oxiden belegt sind, müssen die "reinen" Oberflächen zunächst freigelegt werden, um eine Verbindung auf atomarer Ebene erzeugen zu können. Damit dies gelingt, müssen die Berührungsflächen der beiden Metallvolumina in hinreichendem Maße vergrößert werden. Die Deckschichten dürfen sich jedoch nicht bzw. im Verhältnis zur Berührungsfläche nur in sehr geringem Maß vergrößern.

Eine Möglichkeit die Oberflächen von Fügepartnern aufzureißen besteht darin, diese unter Einfluss von Normalspannungen aneinander zu scheren. Hierbei wird die Oberfläche durchgeknetet und dadurch vergrößert, wodurch die Verunreinigungen und Oxide aufreißen, so dass die reine Metalloberfläche freigelegt wird. In Abhängigkeit von der Höhe der eingebrachten Scherung lassen sich einerseits die Verunreinigungen und Oxide stark zerkleinern und andererseits die Oberfläche signifikant vergrößern.

Das Strangpressen bietet grundsätzlich die Möglichkeit, getrennte Materialströme während der Formgebung miteinander zu "verpressen" und dadurch im Strangpressprodukt eine Fügeverbindung, die sogenannte Strangpressnaht bzw. Pressnaht, zu erzeugen. Die hierfür nötigen Temperaturen und Drücke sowie eine ausreichende Scherung kann mittels Strangpressprozess eingebracht werden. Auf diese Weise lassen sich unterschiedliche Werkstoffe und Legierungen während des Strangpressens verbinden. In verschiedenen Arbeiten wurde das Strangpressen von Verbunden aus unterschiedlichen metallischen Materialien untersucht und der Einfluss der Prozessgrößen auf die Verbundeigenschaften dargestellt. Auch am Forschungszentrum Strangpressen wurden in der Vergangenheit Untersuchungen zum Strangpressen von Werkstoffverbunden durchgeführt (vgl. Negendank et al., J. Mater Process Tech 212, 2012, 1954; Negendank et al., Key Enginneering Materials 554-557, 2013, 767; Nitschke et al., Magnesium - 10th International Conference on Magnesium alloys and their applications (Editor: K.U. Kainer), 2015, 478). Dabei konnte gezeigt werden, dass sich Werkstoffverbunde mit Hilfe verschiedener Verfahrensvarianten des Strangpressens herstellen lassen.

Werkstoffverbunde können mittels des Verfahrens des hydrostatischen Strangpressens mit Anwendung eines Wirkmediums hergestellt werden (vgl. Ruppin et al., Aluminium 56, 1980, 523). Hierdurch lässt sich der direkte Kontakt und damit Festkörperreibung zwischen Bolzen, Aufnehmer und Pressstempel verhindern oder vermindern (vgl. Bauser et al., Strangpressen, Aluminium-Verlag, Düsseldorf, 2001). Aus diesem Grund weist das Verfahren einen nahezu idealen Materialfluss auf und ermöglicht beispielsweise die Herstellung von zum Beispiel Cu / AI-Verbunden oder Cu / Nb3Sn-Supraleitern. Der verfahrenstechnisch bedingte Aufwand für die Bolzenvorbereitung (geometrische Anpassung der Bolzenvorderseite zur Abdichtung des Aufnehmerinhaltes in Richtung Matrize) sowie die Versuchsdurchführung (Füllung des Aufnehmers mit dem Hydrostatikmedium, Abdichten und entnehmen nach dem Pressvorgang) sind jedoch sehr arbeits-, zeit- und kostenintensiv.

Beim Verbundstrangpressen können zylindrische Multi-Material-Bolzen zum Einsatz kommen. Zum Beispiel lassen sich Magnesiumhybride durch Strangpressen formen und fügen. Allerdings führt das Pressen von Legierungspaarungen mit signifikanten Unterschieden in den Umformwiderständen zu erheblichen Schwierigkeiten beim Einstellen eines homogenen Materialflusses, was zu einem ausgeprägten Verzug im Profil führt bis hin zur Degradation des Profils im Bereich der Pressnaht. Ferner können starke Drehungen und Verschiebungen der Grenzfläche relativ zum Profilquerschnitt auftreten. Diese Effekte können von den jeweiligen Volumenanteilen und der Lage der Bolzenteile abhängen (vgl. Nitschke et al., Magnesium - 10th International Conference on Magnesium alloys and their applications (Editor: Kainer), 2015, 478).

In Verbindung mit dem koaxialen Strangpressen von Aluminium-Magnesiumverbunden wurde gezeigt, dass mittels Strangpressen Verbunde aus Magnesium und Aluminium geformt und gefügt werden können (vgl. Negendank et al., J.Mater Process Tech 212, 2012, 1954; Negendank et al., Key Enginneering Materials 554-557, 2013, 767).

### Zusammenfassung

Aufgabe der Erfindung ist es, ein Verfahren und eine Vorrichtung zum Herstellen eines Strangpressprodukts zu schaffen, mit denen Strangpressprodukte effizienter und variabler herstellbar sind.

Zur Lösung sind ein Verfahren sowie eine Vorrichtung zum Herstellen eines Strangpressprodukts nach den unabhängigen Ansprüchen 1 und 14 geschaffen. Ausgestaltungen sind Gegenstand von abhängigen Unteransprüchen.

Nach einem Aspekt ist ein Verfahren zum Herstellen eines Strangpressprodukts geschaffen. Hierbei wird eine Strangpressvorrichtung bereitgestellt, die Folgendes aufweist: einen Aufnehmer; eine erste Aufnehmerbohrung, die in dem Aufnehmer gebildet und in der ein erster Pressstempel angeordnet ist; eine zweite Aufnehmerbohrung, die in dem Aufnehmer getrennt von der ersten Aufnehmerbohrung gebildet und in der ein zweiter Pressstempel angeordnet ist; und ein Formwerkzeug mit einem Formhohlraum, welcher mit der ersten und der zweiten Aufnehmerbohrung verbunden ist. Bei dem Verfahren ist weiterhin Folgendes vorgesehen: Anordnen eines ersten Werkstoffbolzens aus einem ersten Werkstoff in der ersten Aufnehmerbohrung; Anordnen eines zweiten Werkstoffbolzens aus einem zweiten Werkstoff in der zweiten Aufnehmerbohrung; und Strangpressen eines Strangpressprodukts, bei dem der erste und der zweite Werkstoff form- und stoffschlüssig verbunden sind. Das Strangpressen umfasst hierbei weiterhin Folgendes: Vorschieben des ersten Pressstempels in der ersten Aufnehmerbohrung, derart, dass hierdurch der erste Werkstoff in den Formhohlraum des Formwerkzeugs gepresst und hierbei umgeformt wird; Vorschieben des zweiten Pressstempels in der zweiten Aufnehmerbohrung, derart, dass hierdurch der zweite Werkstoff in den Formhohlraum des Formwerkzeugs gepresst und hierbei umgeformt wird; und stoff- und formschlüssiges Verbinden des ersten und des zweiten Werkstoffs zu einem Strangpressprodukt in dem Formwerkzeug.

Nach einem weiteren Aspekt ist eine Vorrichtung zum Herstellen eines Strangpressprodukts geschaffen, die Folgendes aufweist: einen Aufnehmer; eine erste Aufnehmerbohrung, die in dem Aufnehmer gebildet und in der ein erster Pressstempel angeordnet ist; eine zweite Aufnehmerbohrung, die in dem Aufnehmer getrennt von der ersten Aufnehmerbohrung gebildet und in der ein zweiter Pressstempel angeordnet ist; und ein Formwerkzeug mit einem Formhohlraum, welcher mit der ersten und der zweiten Aufnehmerbohrung in Verbindung steht, derart, dass beim Strangpressen mittels Vorschieben des ersten Pressstempels in der ersten Aufnehmerbohrung und Vorschieben des zweiten Pressstempels in der zweiten Aufnehmerbohrung ein erster Werkstoff eines ersten Werkstoffbolzens aus der ersten Aufnehmerbohrung und ein zweiter Werkstoff eines zweiten Werkstoffbolzens aus der zweiten Aufnehmerbohrung zum Herstellen eines Strangpressprodukts, bei dem der erste und der zweite Werkstoff form- und stoffschlüssig verbunden sind, in dem Formhohlraum einbringbar ist.

Das Vorsehen der mindestens zwei Pressstempel, die in voneinander getrennten Aufnehmerbohrungen angeordnet sind, ermöglicht es, die Pressstempel beim Strangpressen unabhängig voneinander zu betreiben, um mittels Vorschub den jeweiligen Werkstoff in dem Formwerkzeug einzubringen.

Die Bewegung der Pressstempel beim Vorschieben erfolgt regelmäßig in axialer Richtung der Aufnehmerbohrung. Die Aufnehmerbohrungen können endseitig direkt an den Formhohlraum des Formwerkzeugs koppeln, so dass der Werkstoff aus einem Ausgang des Presskanal der Aufnehmerbohrung direkt in einen Eingang des Formhohlraums gelangt. Die Aufnehmerbohrungen bilden jeweils einen Hohlraum, in welchem der Werkstoff mit Pressdruck beaufschlagt wird, um diesen aus der Aufnehmerbohrung in das Formwerkzeug einzubringen und hierbei umzuformen.

Die Aufnehmerbohrungen können mit einer Zylinderform gebildet sein.

Beim Strangpressen werden die Werkstoffe in dem Formwerkzeug entlang einer Fügeverbindung (Fügenaht) stoff- und formschlüssig verbunden.

Bei den Werkstoffen kann es sich um metallische Werkstoffe unterschiedlicher Art handeln, zum Beispiel Aluminium oder Magnesium.

Die Ausbildung getrennter Aufnehmerbohrungen mit jeweiligem Pressstempel ermöglicht voneinander entkoppelte Vorschubbewegungen der Pressstempel in den Aufnehmerbohrungen.

Das stoff- und formschlüssige Verbinden kann in dem Formwerkzeug zwischen dem ersten und dem zweiten Werkstoff ausgeführt werden. Mittels der aufeinander entkoppelten Vorschubbewegung der Pressstempel in den getrennten Aufnehmerbohrungen kann die Spannung zwischen dem ersten und dem zweiten Werkstoff in dem Formhohlraum eingestellt und variiert werden.

Der erste und der zweite Werkstoff können mit unterschiedlicher Fließgeschwindigkeit in dem Formhohlraum eingebracht werden. Die Einstellbarkeit unterschiedlicher Fließgeschwindigkeiten ermöglicht eine Anpassung des Strangpressprozesses an unterschiedliche Werkstoffe. Auch kann der Herstellungsprozess so für die Anforderungen bei verschiedenen Strangpressprodukten optimiert werden. In einer alternativen Prozessführung können der erste und zweite Werkstoff mit im Wesentlichen gleicher Fließgeschwindigkeit in dem Formhohlraum eingebracht werden.

Ein erster Vorschub beim Vorschieben des ersten Pressstempels in der ersten Aufnehmerbohrung und ein zweiter Vorschub beim Vorschieben des zweiten Pressstempels in der zweiten Aufnehmerbohrung können unabhängig voneinander geregelt werden. Die voneinander entkoppelte Einstell- oder Regelbarkeit des Vorschubs der Pressstempel in den getrennten Aufnehmerbohrungen ermöglicht eine individuelle Anpassung des Strangpressprozesses an verschiedene Prozessführungen, beispielweise in Abhängigkeit von den Werkstoffen und / oder dem herzustellenden Strangpressprodukt.

Das Vorschieben des ersten Pressstempels in der ersten Aufnehmerbohrung kann mit einer ersten Vorschubgeschwindigkeit und das Vorschieben des zweiten Pressstempels in der zweiten Aufnehmerbohrung kann mit einer zweiten Vorschubgeschwindigkeit ausgeführt werden, die von der ersten Vorschubgeschwindigkeit verschieden ist. Mittels unterschiedlicher Vorschubgeschwindigkeiten können insbesondere die Fließgeschwindigkeiten für die Werkstoffe beim Übergang aus der Aufnehmerbohrung in den Formhohlraum des Formwerkzeugs eingestellt werden.

Der erste Pressstempel kann beim Bewegen in der ersten Aufnehmerbohrung mittels eines ersten Aktors und der zweite Pressstempel kann beim Bewegen in der zweiten Aufnehmerbohrung mittels eines zweiten Aktors angetrieben werden, welcher getrennt von dem ersten Aktor gebildet und steuerbar ist. Alternativ kann vorgesehen sein, die Presstempel mit einem Aktor zu betätigen, der den Pressstempeln gemeinsam zugeordnet ist. Der gemeinsame Aktor kann entkoppelte Aktorelemente aufweisen, die eine entkoppelte Vorschubbewegung der Presstempel bewirken können.

Als zweiter Werkstoff kann ein Werkstoff verwendet werden, welcher von dem ersten Werkstoff verschieden ist. Beispielsweise können verschiedene metallische Werkstoffe zum Einsatz kommen.

Für den ersten und den zweiten Werkstoff kann der gleiche Werkstoff verwendet werden.

Als Strangpressprodukt kann ein Strangpressprofil hergestellt werden. Das Strangpressprofil kann mit beliebigen Profilquerschnitten hergestellt werden. Mittels des Verfahrens lassen sich Strangpressprofile mit axial veränderlichen Volumenanteilen unterschiedlicher Werkstoffe herstellen. Darüber hinaus lassen sich mit geeigneten Matrizenkonstruktionen Strangpressprodukte mit axial veränderlichem Querschnitt und gleichzeitig axial veränderlichen Volumenanteilen unterschiedlicher Werkstoffe herstellen.

Es kann eine Strangpressvorrichtung bereitgestellt sein, bei der quer zur jeweiligen Vorschubrichtung die erste Aufnehmerbohrung einen ersten Querschnitt und die zweite Aufnehmerbohrung einen zweiten Querschnitt aufweist, welcher von dem ersten Querschnitt verschieden ist. Die Aufnehmerbohrungen können bei dieser oder anderen Ausführungsformen mit runden, eckigen oder ovalen Querschnitt gebildet sein, insbesondere kreisrund oder verschiedene von kreisrund.

Alternativ kann eine Strangpressvorrichtung bereitgestellt werden, bei der quer zur jeweiligen Vorschubrichtung die erste Aufnehmerbohrung den ersten Querschnitt und die zweite Aufnehmerbohrung den zweiten Querschnitt aufweist, welcher gleich dem ersten Querschnitt ist. Die Gleichheit oder Unterschiedlichkeit der Querschnitte kann sich zum Beispiel auf die Gesamtfläche des Querschnitts und / oder die Form der Querschnittsfläche beziehen. Auch eine Identität der Querschnitte kann vorgesehen sein, also eine Gleichheit sämtlicher Querschnittseigenschaften.

Es kann eine Strangpressvorrichtung bereitgestellt oder verwendet werden, bei der quer zur jeweiligen Vorschubrichtung die erste Aufnehmerbohrung einen ersten kreisrunden Querschnitt und die zweite Aufnehmerbohrung einen zweiten kreisrunden Querschnitt aufweist.

Es kann eine Strangpressvorrichtung bereitgestellt werden, bei der die erste Aufnehmerbohrung und die zweite Aufnehmerbohrung gegeneinander abgedichtet sind. Die Aufnehmerbohrungen können hierbei fluiddicht gegeneinander abgedichtet sein, insbesondere Flüssigkeitsdicht.

Die Aufnehmerbohrungen bilden eine jeweilige Aufnahme für den Pressstempel (Stempelaufnahme).

Die vorangehend in Verbindung mit dem Verfahren zum Herstellen eines Strangpressprodukts erläuterten Ausgestaltungen können in Verbindung mit der Vorrichtung zum Herstellen des Strangpressprodukts entsprechend vorgesehen sein.

Mittels der vorgeschlagenen Technik kann in einer Ausgestaltung vorgesehen sein, dass die einzelnen Materialströme den Formhohlraum homogen speisen, sodass innerhalb des Formhohlraums und im Bereich des Presskanals möglichst wenig Scherung in Pressrichtung erzeugt wird. Hierdurch lassen sich die Kontaktschubspannungen und auch die axialen Dehnungsdifferenzen zwischen den Werkstoffpartnern beim Fügeprozess minimieren. Es wird eine homogene Strangaustrittsgeschwindigkeit über den gesamten Querschnitt erzielt und eine schädigende Scherung im Bereich der Grenzschicht wird verhindert. In anderen Worten bedeutet das, dass Materialströme mit gleicher Fließgeschwindigkeit in dem Formhohlraum zusammengebracht und diese durch einen Mindestdruck aneinander pressbar sind, um ein stoffschlüssiges Hybrid zu erzeugen.

So können in einer Ausführungsform lokal gleich schnelle Materialströme mit unterschiedlichen Pressmaterialien realisiert werden, welche abweichende Umformwiderstände und Prozessfenster aufweisen. Bei der Anwendung einer klassischen Strangpresse mit nur einem Pressstempel ist dies nicht realisierbar Insbesondere ist es bei der Anwendung der klassischen Strangpresse mit nur einem Pressstempel nicht möglich, den Druck in den Bereichen primäre Umformzone, Schweißkammer und Presskanal auf gleichem Niveau einzustellen, um die Grenzschichtverschiebung zu verhindern.

Es kann vorgesehen sein, beim Herstellen des Strangpressprodukts den Querschnitt von stranggepressten Verbundprofilen entsprechend den im Einsatz vorherrschenden Belastungen auf Bauteile und Komponenten lokal anzupassen. Beispielsweise kann vorgesehen sein, die Wandstärke eines für eine Lastaufnahme beim Strangpressprodukt verantwortlichen Werkstoffs in ersten Bereichen dickwandiger auszuführen als in schwächer belasteten Regionen (zweite Bereiche, die von den ersten Bereichen verschieden sind), die dann mit einer geringeren Wandstärke ausgeführt werden. Die Entwicklung von belastungsangepassten, maßgeschneiderten Profilen kann das Gewicht von stranggepressten Komponenten oder Bauteilen gegenüber solchen, die über den konventionellen Herstellungsprozess erzeugt wurden, vermindern.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische Darstellung einer Vorrichtung zum Herstellen eines Strangpressprodukts;
- Fig. 2: eine perspektivische Darstellung eines Aufnehmers für eine Strangpressvorrichtung, bei dem ein erster und ein zweiter Presstempel in einer ersten und einer zweiten Aufnehmerbohrung angeordnet sind;
- Fig. 3: eine schematische perspektivische Darstellung einer Anordnung mit zwei Pressstempeln zum Pressen von Werkstoffbolzen mit gleichen Vorschubgeschwindigkeiten;
- Fig. 4: eine schematische perspektivische Darstellung einer Anordnung mit zwei Pressstempeln zum Pressen von Werkstoffbolzen mit unterschiedlichen Vorschubgeschwindigkeiten und
- Fig. 5: eine schematische Darstellung eines Formwerkzeugs von vorn.

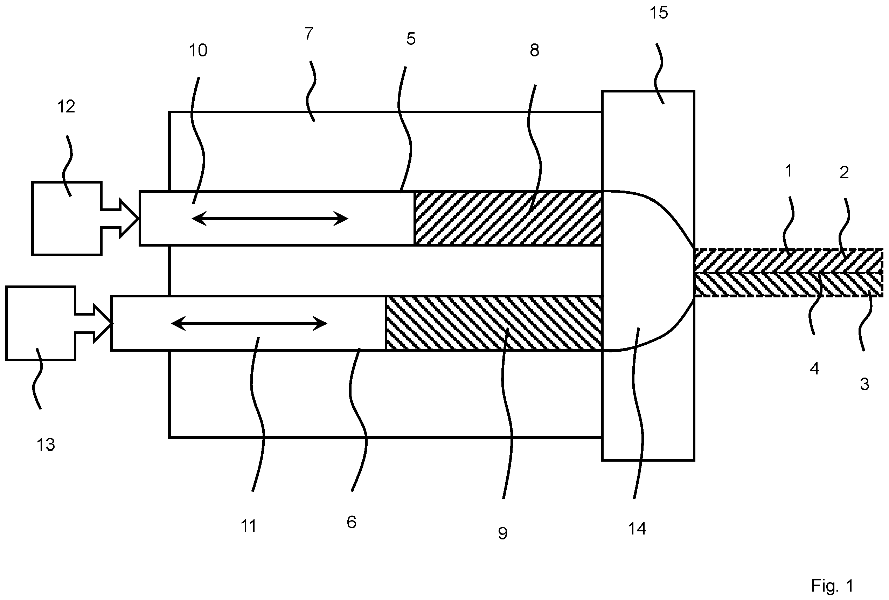

Fig. 1 zeigt eine schematische Darstellung einer Vorrichtung zum Herstellen eines Strangpressprodukts 1, bei dem ein erster Werkstoff 2 und ein zweiter Werkstoff 3 entlang einer Fügeverbindung oder -naht 4 form- und stoffschlüssig mittels Strangpressen miteinander verbunden sind. Bei dem Strangpressprodukt 1 kann es sich um ein Strangpressprofil handeln.

Die Formulierung "Strangpressprofil" in der hier verwendeten Bedeutung umfasst alle mit Hilfe des Strangpressprozesses herstellbaren Profilgeometrien. Hierzu zählen zum Beispiel sowohl Vollprofile als auch Hohlprofile sowie Halbhohlprofile in beliebigen Geometrien. So sind als Strangpressprofile beispielweise stranggepresste "Bleche" ebenso wie Rohre, Fensterprofile oder Rundstangen bekannt.

Zum Herstellen des Strangpressprodukts 1 sind in einer ersten und einer zweiten Aufnehmerbohrung 5, 6 eines Aufnehmers 7 ein erster Werkstoffbolzen 8 aus dem ersten Werkstoff 2 und ein zweiter Werkstoffbolzen 9 aus dem zweiten Werkstoff 3 angeordnet. Die erste und die zweite Aufnehmerbohrung 5, 6 stellen einen jeweiligen Hohlraum mit einer Zylinderform zur Verfügung, der einen runden, eckigen oder ovalen Querschnitt aufweisen kann. In den Aufnehmerbohrungen 5, 6 sind ein erster und ein zweiter Pressstempel 10, 11 angeordnet, die jeweils in axialer Richtung in der zugeordneten Aufnehmerbohrung 5, 6 verschiebbar sind.

Dem ersten und dem zweiten Pressstempel 10, 11 sind ein erster und ein zweiter Aktor 12, 13 zugeordnet, welche eingerichtet sind, den jeweiligen Pressstempel 10, 11 mit Kraft zu beaufschlagen, so dass die Pressstempel 10, 11 eine Vorschubbewegung in Richtung eines Formhohlraums 14 eines Formwerkzeugs 15 ausführen, um so den ersten und den zweiten Werkstoff 2, 3 in dem Formhohlraum 14 einzubringen. Hierzu stehen die erste und die zweite Aufnehmerbohrung 5, 6 mit dem Formhohlraum 14 in Verbindung, derart, dass das Material des ersten und des zweiten Werkstoffbolzens 8, 9 in dem Formhohlraum 14 eingebracht und hierbei umgeformt wird. Die Druckbeaufschlagung führt dazu, dass in dem Formhohlraum 14 die Fügeverbindung 4 zwischen den ersten und dem zweiten Werkstoff 2, 3 ausgebildet wird.

Mit Hilfe des ersten und des zweiten Aktors 12, 13, können der erste und der zweite Pressstempel 10, 11 voneinander entkoppelte Vorschubbewegungen beim Strangpressen ausführen. Insbesondere können sich die Pressstempel 10, 11 mit unterschiedlicher Geschwindigkeit beim Vorschub bewegen. Mit Hilfe der unabhängigen Einstellung der beiden Vorschubbewegungen ist es ermöglicht, für den Übergang des ersten und des zweiten Werkstoffs 2, 3 in den Formhohlraum 14 unterschiedliche Fließgeschwindigkeiten einzustellen. Der erste und der zweite Werkstoff 2, 3 können zum Beispiel unterschiedliche metallische Werkstoffe sein, aber auch die Verwendung gleicher metallischer Werkstoffe für die beiden Werkstoffbolzen 8, 9 kann vorgesehen sein. Das erzeugte Strangpressprodukt 1 kann ein Strangpressprofil sein.

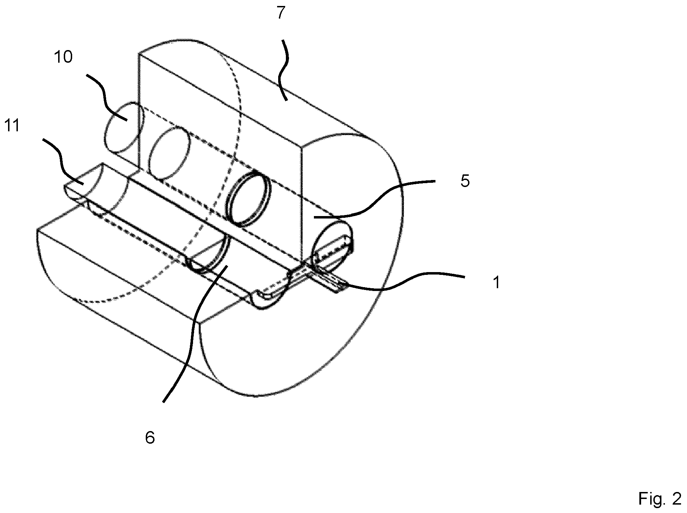

Weitere Ausführungsbeispiele werden nachfolgend unter Bezugnahme auf die Fig. 2 bis 5 erläutert. Für gleiche Merkmale werden die gleichen Bezugszeichen wie in Fig. 1 verwendet.

Fig. 2 zeigt eine schematische Darstellung einer Anordnung für eine Strangpressvorrichtung, bei der in der ersten und der zweiten Aufnehmerbohrung 5, 6 Pressstempel 10, 11 mit unterschiedlichem Querschnitt angeordnet sind. Während der erste Pressstempel 10 einen runden Querschnitt aufweist, ist der zweite Pressstempel 11 mit einem eckigen (flachen) Querschnitt vorgesehen. Entsprechend weisen die erste und die zweite Aufnehmerbohrung 5, 6 einen runden und einen eckigen Querschnitt auf. In den verschiedenen Ausführungsformen sind die Pressstempel 10, 11 formschlüssig in der zugeordneten Aufnehmerbohrung 5, 6 angeordnet. Gemäß Fig. 2 verfügen dann auch die Werkstoffbolzen 8, 9 über einen runden sowie einen eckigen Querschnitt.

Eine formschlüssige Abdichtung kann mittels einer zwischen Pressstempel 10, 11 und Werkstoffbolzen 8, 9 positionierte sogenannte "Pressscheibe" (nicht dargestellt). Diese findet sowohl fest - im Sinne von "konstruktiv temporär miteinander verbunden, jedoch austauschbar" - als auch lose Verwendung.

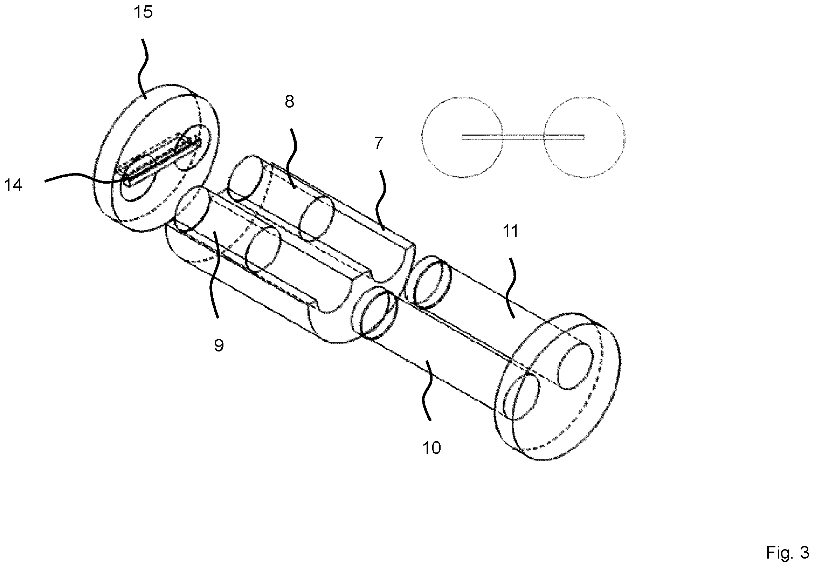

Fig. 3 zeigt eine schematische Darstellung von Elementen einer Anordnung für eine Strangpressvorrichtung, bei der der erste und der zweite Werkstoffbolzen 8, 9 mit gleicher Bolzenlänge gebildet sind. Auch weisen die erste und die zweite Aufnehmerbohrung 5, 6 den gleichen Querschnitt auf. Beim Strangpressen kann dann vorgesehen sein, den ersten und den zweiten Pressstempel 10, 11 mit gleicher Vorschubgeschwindigkeit zu betreiben.

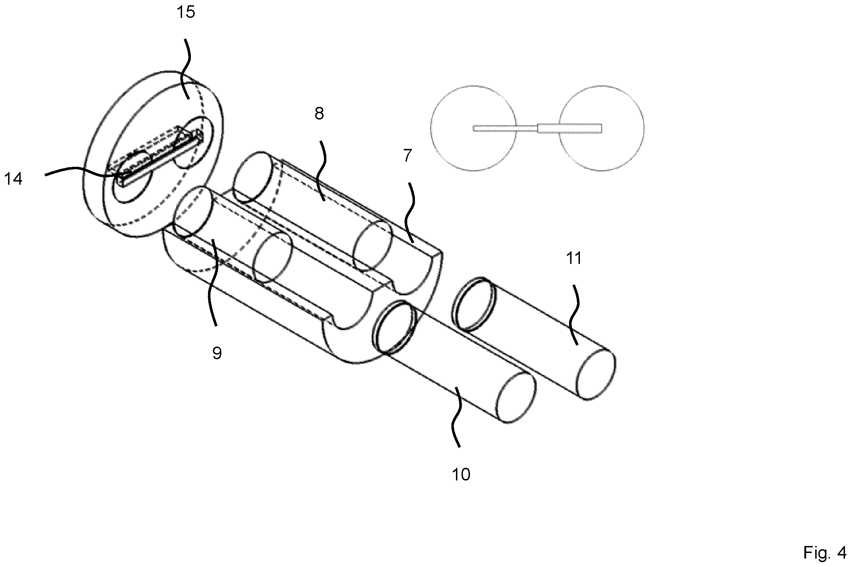

Im Unterschied zeigt Fig. 4 eine schematische Darstellung von Elementen für eine Anordnung einer Strangpressvorrichtung, bei der erste und der zweite Werkstoffbolzen 8, 9 mit unterschiedlicher Länge gebildet sind. Beim Strangpressen kann dann der erste Pressstempel 10 mit abweichender Vorschubgeschwindigkeit betrieben werden, als der zweite Pressstempel 11.

Um den Aufnehmer 7 und das Formwerkzeug 15 mit dem Formhohlraum 14 während des eigentlichen Strangpressvorgangs relativ zueinander zu positionieren, kann vorgesehen sein, am Aufnehmer 7 und am Formwerkzeug 15 einander zugeordnete konstruktive Elemente (nicht dargestellt) auszubilden. Beim Zusammenfügen von Aufnehmer 1 und Formwerkzeug 15, derart, dass der Formhohlraum 14 der ersten und der zweiten Aufnehmerbohrung 5, 6 gegenüberliegend angeordnet wird, werden Aufnehmer 1 und Formwerkzeug 15 relativ zueinander positioniert, indem ein Stift oder ein Bolzen (nicht dargestellt) in vorgesehene Aussparungen greifen oder auch sich Funktionsflächen zueinander ausrichten.

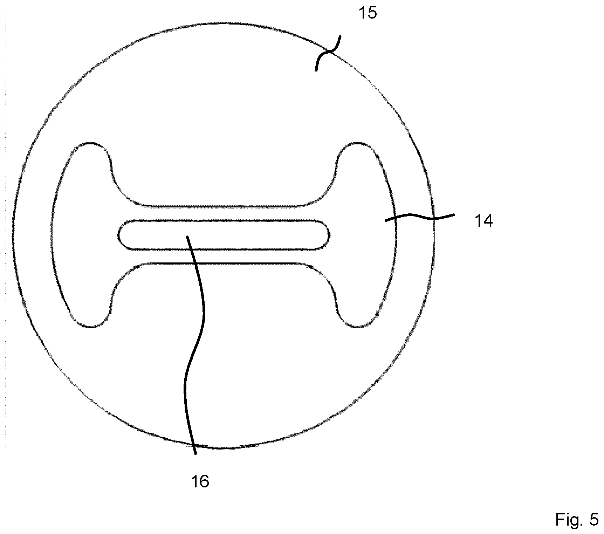

Fig. 5 zeigt eine schematische Darstellung einer Ausführung des Formwerkzeugs 15 von vorn. Das Pressprodukt verlässt im Betrieb beim Strangpressen den Formhohlraum 14 durch einen (Ausgang des) Presskanal(s) 16.

Nachfolgend werden Aspekte zu weiteren Ausführungsbeispielen erläutert.

Das Verfahren zum Hybridstrangpressen mittels des Mehrstempelsystems nutzt zum Beispiel die vorangehend erläuterte Zweifachstempel-Ausführung mit dem Mehrlochrezipienten oder -aufnehmer 7 mit den mindestens zwei Hohlräumen für die Aufnehmerbohrungen 5, 6 und der entsprechenden Anzahl individuell verfahrbarer und steuerbarer Pressstempel 10, 11. Das Formwerkzeug 15 (Strangpressmatrize) wird durch die getrennten Materialströme gespeist. Der Formhohlraum 14 stellt eine Schweißkammer bereit, um die Teilstränge der Werkstoffe durch Einwirkung von Druck und Temperatur zu fügen.

Die Pressstempel 10, 11 bewegen das Pressgut in den Werkstoffbolzen 8, 9 in Abhängigkeit von den individuellen Pressverhältnissen entweder gleich schnell oder mit unterschiedlichen Geschwindigkeiten in Richtung des Formwerkzeug 15. Die einzelnen Aufnehmerbohrungen 5, 6 und entsprechenden Pressscheiben müssen nicht dieselben Durchmesser aufweisen.

Bei dem Verfahren werden die Werkstoffbolzen 8, 9 vergleichbar mit dem direkten Strangpressen durch die Aufnehmerbohrungen 5, 6 hindurch in Richtung des Formwerkzeugs 15 (Matrize) bewegt. Hierbei können aufgrund der Relativbewegung zwischen den Innenwänden der Aufnehmerbohrungen 5, 6 und den Mantelflächen der Werkstoffbolzen 8, 9 bereits große Teile der Oxide und Verunreinigungen der Pressbolzen zurückgehalten werden. Die Materialströme, welche den Formhohlraum 14 speisen, sind bereits geschert und enthalten nur noch einen geringen Teil an Verunreinigungen. In den Formhohlraum 14 fließen Materialströme mit nahezu reinen metallischen Oberflächen ein. Diese werden in dem Formhohlraum 14 gefügt und treten als Verbundstrang (Strangpressprodukt 1) durch den Presskanal 16 aus dem Formwerkzeug 15 aus.

In Abhängigkeit der für die einzelnen Materialströme vorgesehenen individuellen Pressverhältnisse können die Stempelgeschwindigkeiten angepasst werden, sodass, entsprechend der Produktvorgabe, definierte Volumenanteile der einzelnen Verbundpartner im Produkt realisiert werden können. Gleichzeitig lässt sich durch die Festlegung der Volumenanteile eine definierte Positionierung der Grenzschicht beeinflussen.

Für den Fall des Pressens bei gleicher Geschwindigkeit beider Pressstempel 10, 11 sowie gleicher Querschnittsflächen der Aufnehmerbohrungen 5, 6 wird ein Profil gepresst, in dem die Verbundmaterialien mit gleichem Volumenstrom nebeneinander ausgepresst werden. Durch eine gezielt einstellbare individuelle Prozesstemperatur für die beiden Werkstoffbolzen 5, 6 können Verbundflachprofile sowohl aus Materialpaarungen mit geringen als auch mit großen Unterschieden im Umformwiderstand aus den jeweiligen Aufnehmerbohrungen 5, 6 hergestellt werden.

Für den Fall, dass beide Werkstoffe 2, 3 in unterschiedlich großen Volumenanteilen im Strangpressprodukt 1 vorliegen sollen, ergeben sich bei Beibehaltung der Aufnehmergeometrie für jeden Werkstoff (Hybridpartner) unterschiedliche Volumenströme. Dem wird durch Anpassung der Bolzenlänge in Verbindung mit zwei unterschiedlich schnell verfahrenden Pressstempeln Rechnung getragen. Dazu ist es erforderlich, dass sich beide Presstempel 10, 11 weggesteuert verfahren lassen. Um die Presstempel 10, 11 autark steuern zu können, kann die Strangpresse ein separates Hydrauliksystem für die Bewegung des Presstempel 10, 11 aufweisen.

In den beschriebenen Ausführungsformen können einzelne oder mehrere der folgenden Vorteile gegenüber bekannten Strangpressverfahren erreicht werden: Thermische und tribologische Entkopplung der Werkstoffpartner; Einstellbarkeit unterschiedlicher Bolzeneinsatztemperaturen; Separate Steuerung der Fließgeschwindigkeiten der Werkstoffpartner; individuelle Anpassung der erforderlichen Prozessvariablen; und gezielte Lenkung der Materialströme für variable Volumenverhältnisse (last- / funktionsangepasste Querschnitte).

Das Verfahren ermöglicht die Herstellung von metallischen Werkstoffverbunden innerhalb eines einzigen Massivumformschritts. Mittels Einsatz von separat steuerbaren Pressstempeln und der Möglichkeit, unterschiedliche Aufnehmerbohrungen (Stempelaufnahmen) zu realisieren, lässt sich das Fließen der Werkstoffpartner mit signifikant unterschiedlichen Fließspannungen derart einstellen, dass über der kompletten Profillänge des Strangpressprodukts 1 ein definierte Werkstoffanordnung (Volumenverhältnis der Werkstoffpartner bzw. Wandstärke der Werkstoffpartner, Ausbildung der Grenzschicht) einstellbar ist.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zum Herstellen eines Strangpressprodukts, mit
- Bereitstellen einer Strangpressvorrichtung, aufweisend
- einen Aufnehmer (7);
- eine erste Aufnehmerbohrung (5), die in dem Aufnehmer (7) gebildet und in der ein erster Pressstempel (10) angeordnet ist;
- eine zweite Aufnehmerbohrung (6), die in dem Aufnehmer (7) getrennt von der ersten Aufnehmerbohrung (5) gebildet und in der ein zweiter Pressstempel (11) angeordnet ist; und
- ein Formwerkzeug (15) mit einem Formhohlraum (14), welcher mit der ersten und der zweiten Aufnehmerbohrung (5, 6) verbunden sind;
- Anordnen eines ersten Werkstoffbolzens (8) aus einem ersten Werkstoff (2) in der ersten Aufnehmerbohrung (5);
- Anordnen eines zweiten Werkstoffbolzens (9) aus einem zweiten Werkstoff (3) in der zweiten Aufnehmerbohrung (6); und
- Strangpressen eines Strangpressprodukts (1), bei dem der erste und der zweite Werkstoff (2, 3) form- und stoffschlüssig verbunden sind, Folgendes aufweisend:
- Vorschieben des ersten Pressstempels (10) in der ersten Aufnehmerbohrung (5), derart, dass hierdurch der erste Werkstoff (2) in den Formhohlraum (14) des Formwerkzeugs (15) gepresst und hierbei umgeformt wird;
- Vorschieben des zweiten Pressstempels (11) in der zweiten Aufnehmerbohrung (6), derart, dass hierdurch der zweite Werkstoff (3) in den Formhohlraum (14) des Formwerkzeugs (15) gepresst und hierbei umgeformt wird; und
- stoff- und formschlüssiges Verbinden des ersten und des zweiten Werkstoffs (2, 3) zu einem Strangpressprodukt (1) in dem Formwerkzeug (15).

2. Verfahren nach Anspruch 1, **dadurch gekennzeichnet, dass** das stoff- und formschlüssige Verbinden in dem Formwerkzeug (15) zwischen dem ersten und dem zweiten Werkstoff (2, 3) ausgeführt wird.

3. Verfahren nach Anspruch 1 oder 2, **dadurch gekennzeichnet, dass** der erste und der zweite Werkstoff (2, 3) mit unterschiedlicher Fließgeschwindigkeit in dem Formhohlraum (14) eingebracht werden.

4. Verfahren nach mindestens einem der vorangehenden Ansprüche, **dadurch gekennzeichnet, dass** ein erster Vorschub beim Vorschieben des ersten Pressstempels (10) in der ersten Aufnehmerbohrung (5) und ein zweiter Vorschub beim Vorschieben des zweiten Pressstempels (11) in der zweiten Aufnehmerbohrung (6) unabhängig voneinander geregelt werden.

5. Verfahren nach mindestens einem der vorangehenden Ansprüche, **dadurch gekennzeichnet, dass** das Vorschieben des ersten Pressstempels (10) in der ersten Aufnehmerbohrung (5) mit einer ersten Vorschubgeschwindigkeit und das Vorschieben des zweiten Pressstempels (11) in der zweiten Aufnehmerbohrung (6) mit einer zweiten Vorschubgeschwindigkeit ausgeführt werden, die von der ersten Vorschubgeschwindigkeit verschieden ist.

6. Verfahren nach mindestens einem der vorangehenden Ansprüche, **dadurch gekennzeichnet, dass** der erste Pressstempel (10) beim Bewegen in der ersten Aufnehmerbohrung (5) mittels eines ersten Aktors und der zweite Pressstempel (11) beim Bewegen in der zweiten Aufnehmerbohrung (6) mittels eines zweiten Aktors angetrieben wird, welcher getrennt von dem ersten Aktor gebildet und steuerbar ist.

7. Verfahren nach mindestens einem der vorangehenden Ansprüche, **dadurch gekennzeichnet, dass** als zweiter Werkstoff (3) ein Werkstoff verwendet wird, welcher von dem ersten Werkstoff (2) verschieden ist.

8. Verfahren nach mindestens einem der Ansprüche 1 bis 6, **dadurch gekennzeichnet, dass** für den ersten und den zweiten Werkstoff (2, 3) der gleiche Werkstoff verwendet wird.

9. Verfahren nach mindestens einem der vorangehenden Ansprüche, **dadurch gekennzeichnet, dass** als Strangpressprodukt (1) ein Strangpressprofil hergestellt wird.

10. Verfahren nach mindestens einem der vorangehenden Ansprüche, **dadurch gekennzeichnet, dass** eine Strangpressvorrichtung bereitgestellt wird, bei der quer zur jeweiligen Vorschubrichtung die erste Aufnehmerbohrung (5) einen ersten Querschnitt und die zweite Aufnehmerbohrung (6) einen zweiten Querschnitt aufweist, welcher von dem ersten Querschnitt verschieden ist.

11. Verfahren nach mindestens einem der Ansprüche 1 bis 9, **dadurch gekennzeichnet, dass** eine Strangpressvorrichtung bereitgestellt wird, bei der quer zur jeweiligen Vorschubrichtung die erste Aufnehmerbohrung (5) den ersten Querschnitt und die zweite Aufnehmerbohrung (6) den zweiten Querschnitt aufweist, welcher gleich dem ersten Querschnitt ist.

12. Verfahren nach mindestens einem der vorangehenden Ansprüche, **dadurch gekennzeichnet, dass** eine Strangpressvorrichtung bereitgestellt wird, bei der quer zur jeweiligen Vorschubrichtung die erste Aufnehmerbohrung (5) einen ersten kreisrunden Querschnitt und die zweite Aufnehmerbohrung (6) einen zweiten kreisrunden Querschnitt aufweist.

13. Verfahren nach mindestens einem der vorangehenden Ansprüche, **dadurch gekennzeichnet, dass** eine Strangpressvorrichtung bereitgestellt wird, bei der die erste Aufnehmerbohrung (5) und die zweite Aufnehmerbohrung (6) gegeneinander abgedichtet sind.

14. Vorrichtung zum Herstellen eines Strangpressprodukts, mit
- einem Aufnehmer (7);
- einer ersten Aufnehmerbohrung (5), die in dem Aufnehmer (7) gebildet und in der ein erster Pressstempel (10) angeordnet ist;
- einer zweiten Aufnehmerbohrung (6), die in dem Aufnehmer (7) getrennt von der ersten Aufnehmerbohrung (5) gebildet und in der ein zweiter Pressstempel (11) angeordnet ist; und
- einem Formwerkzeug (15) mit einem Formhohlraum (14), welcher mit der ersten und der zweiten Aufnehmerbohrung (5, 6) in Verbindung steht, derart, dass beim Strangpressen mittels Vorschieben des ersten Pressstempels (10) in der ersten Aufnehmerbohrung (5) und Vorschieben des zweiten Pressstempels (11) in der zweiten Aufnehmerbohrung (6) ein erster Werkstoff (2) eines ersten Werkstoffbolzens (8) aus der ersten Aufnehmerbohrung (5) und ein zweiter Werkstoff (3) eines zweiten Werkstoffbolzens (9) aus der zweiten Aufnehmerbohrung (6) zum Herstellen eines Strangpressprodukts (1), bei dem der erste und der zweite Werkstoff (2, 3) form- und stoffschlüssig verbunden sind, in dem Formhohlraum (14) einbringbar ist.
